# EUROPEAN PATENT SPECIFICATION

(11) **EP 2 492 308 B1**
(45) Date of publication and mention of the grant of the patent: **21.10.2015**
(21) Application number: 10824804.8
(22) Date of filing: 07.10.2010
(51) Int. Cl.: C08L 23/00, C08K 5/25

(54) **POLYOLEFIN RESIN COMPOSITION**
POLYOLEFINHARZZUSAMMENSETZUNG
COMPOSITION DE RÉSINE DE POLYOLÉFINE

(30) Priority: 23.10.2009 JP 2009244760
(43) Date of publication of application: 29.08.2012
(73) Proprietor: Adeka Corporation, Tokyo 116-8554 (JP)
(72) Inventor: NOMURA, Kazukiyo, Saitama-shi Saitama 336-0022 (JP); FUKUSHIMA, Mitsuru, Saitama-shi Saitama 336-0022 (JP)
(74) Representative: Forstmeyer, Dietmar
(86) International application number: PCT/JP2010/067633
(87) International publication number: WO 2011/048955

(56) References cited:
- JP-A- 5 002 927
- JP-A- 51 033 142
- JP-A- 2004 352 820
- JP-A- 2004 352 873
- US-A- 3 734 885

## Description

### TECHNICAL FIELD

The present invention relates to the use of a specific isophthalic acid derivative as a nucleator in a polyolefin resin composition.

### BACKGROUND ART

It is known that polyolefin resins such as polypropylene and polyethylene have an improved molding cycle due to improvement of transparency and mechanical strength and increase in crystallization velocity by addition of a compound such as aluminum p-t-butylbenzoate, dibenzylidene sorbitols, metal salts of aromatic phosphate esters, metal salts of bicyclo[2,2,1]heptene-1,2-dicarboxylate and metal salts of bicyclo[2,2,1]heptane-1,2-dicarboxylate as a nucleator (for example, see Patent Literature 1).

However, when the above-mentioned compound that can improve a molding cycle by improving mechanical strength or increasing a crystallization velocity suggested in Patent Literature 1 was used as a nucleator, shrinkage of the resin occurred during crystallization and the resin deformed due to anisotropicity in shrinkage factors, and thus it was difficult to obtain a molded article having high dimension accuracy.

On the other hand, Patent Literature 2 suggested, in a synthetic resin that is used by contacting with a heavy metal, suppressing the deterioration of the synthetic resin that is considered to be attributed to the heavy metal, by using a hydrazide compound. Furthermore, the hydrazide compound is suggested by Patent Literature 3 as a nucleator for a polylactic acid.

However, the hydrazide compound suggested in Patent Literature 2 exhibited an effect in deactivation of the heavy metal but did not exhibit an effect of promoting the crystallization of a polyolefin resin. Furthermore, although the hydrazide compound suggested in Patent Literature 3 exhibited a significant effect in the improvement of the crystallization temperature of the polylactic acid, it exhibited a little effect of improving a crystallization temperature in a polyolefin resin, exhibited a little effect of improving physical characteristics such as a bending flexural modulus and provided high anisotropicity in shrinkage factors, and thus the hydrazide compound did not show so high effects that one dares to incorporate it as a crystalline nucleator for the polyolefin resin.

### CITATION LIST

### PATENT LITERATURE

Patent Literature 1: Japanese Patent Application Laid-Open (JP-A) No. 58-1736 (European Patent No. 0068326) (specifically Claims)
Patent Literature 2: Japanese Patent Application Publication No. 52-22834 (specifically Claims)
Patent Literature 3: JP-A No. 2004-352873 (specifically Claims and Examples)

### DISCLOSURE OF THE INVENTION

### PROBLEM TO BE SOLVED BY THE INVENTION

Therefore, an object of the present invention is to provide the use of a specific isophthalic acid derivative as a nucleator in a polyolefin resin composition, which has an excellent effect in molding cycle and mechanical characteristics and provides small deformation during molding.

### MEANS FOR SOLVING THE PROBLEM

The present inventors have done intensive studies in view of the above-mentioned present situation and consequently found that excellent effects in molding cycle and mechanical characteristics, and small anisotropicity in shrinkage factors can be obtained by using a specific isophthalic acid derivative as a nucleator in a polyolefin resin composition, and achieved the present invention.

That is, the present invention provides the use of (B), a compound represented by the following formula (I), as a nucleator in a polyolefin resin composition, the polyolefin resin composition comprising 0.01 to 10 parts by mass of (B) with respect to 100 parts by mass of (A) a polyolefin resin:

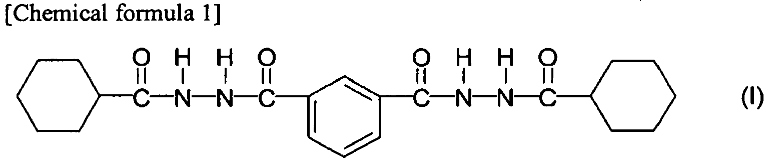

### EFFECT OF THE INVENTION

According to the present invention, the use of a specific isophthalic acid derivative as a nucleator in a polyolefin resin composition provides excellent effects in molding cycle and mechanical characteristics and provides small anisotropicity in shrinkage factors.

### BEST MODES FOR CARRYING OUT THE INVENTION

Hereinafter, the present invention will be explained in detail based on the preferable embodiments.

Examples of the polyolefin resin as the component (A) used in the present invention may include ethylene and α-olefin polymers such as polypropylenes, high density polyethylenes, low density polyethylenes, straight chain low density polyethylenes, polybutene-1, poly-3-methylpentene, ethylene/propylene random copolymers and propylene block copolymers.

Although these polyolefin resins are different in the degree of the effect of the present invention depending on the density, softening point, melt flow rate, average molecular weight, molecular weight distribution, ratio of insoluble components in a solvent, degree of tacticity, kind of a polymerization catalyst, presence or absence of a step of treating a catalyst residue, and kind and incorporation ratio of an olefin to be used as a raw material, all of these are effective.

In the polyolefin resin composition, the compound represented by the above-mentioned formula (I) that is the above-mentioned component (B) is incorporated by 0.01 to 10 parts by mass, preferably by 0.05 to 5 parts by mass, with respect to 100 parts by mass of the polyolefin resin that is the above-mentioned component (A). When the incorporation amount of the compound represented by the above-mentioned formula (I) is lower than 0.01 part by mass, an effect as a nucleator cannot be obtained, whereas when the incorporation amount of the compound represented by the above-mentioned formula (I) exceeds 10 parts by mass, a bulking effect is little and burden of costs is great, and there is also a problem that an appearance is deteriorated by bleeding.

The method for manufacturing the compound represented by the above-mentioned formula (I) may include, for example, a method including reacting an acid halide of isophthalic acid with 2-fold mol or more of hydrazine, followed by a reaction with cyclohexanecarboxylic acid halide.

It is preferable to use an antioxidant such as a phenolic antioxidant, a phosphorus antioxidant, a thioether antioxidant and a hydroxyamine antioxidant, an ultraviolet absorbent, a hindered amine light stabilizer and other nucleator in combination as necessary in the polyolefin resin composition.

Examples of the above-mentioned phenolic antioxidant may include 2,6-di-tert-butyl-p-cresol, 2,6-diphenyl-4-octadecyloxyphenol, distearyl (3,5-di-tert-butyl-4-hydroxybenzyl)phosphonate, 1,6-hexamethylenebis[(3,5-di-tert-butyl-4-hydroxyphenyl) propionic acid amide], 4,4'-thiobis(6-tert-butyl-m-cresol), 2,2'-methylenebis(4-methyl-6-tert-butylphenol), 2,2'-methylenebis(4-ethyl-6-tert-butylphenol), 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl (3,5-di-tert-butyl-4-hydroxyphenyl)propionate, thiodiethylene glycol bis[(3,5-di-tert-butyl-4-hydroxyphenyl)propionate], 1,6-hexamethylenebis[(3,5-di-tert-butyl-4-hydroxyphenyl)propionate], bis[3,3-bis(4-hydroxy-3-tert-butylphenyl)butyric acid]glycol ester, bis[2-tert-butyl-4-methyl-6-(2-hydroxy-3-tert-butyl-5-methylbenryl)phenyl]telephthalate, 1,3,5-tris[(3,5-di-tert-butyl-4-hydroxyphenyl)propionyloxyethyl]isocyanurate, tetrakis[3-(3,5-di-tert-butyl-4-hydroxyphenyl)methyl propionate]methane, 3,9-bis[1,1-dimethyl-2-{(3-tert-butyl-4-hydroxy-5-methylphenyl)propionyloxy}ethyl]-2 ,4,8,10-tetraoxaspiro[5.5]undecane, triethylene glycol bis[(3-tert-butyl-4-hydroxy-5-methylphenyl)propionate] and the like.

The content of the above-mentioned phenolic antioxidant is preferably 0.001 to 10 parts by mass, more preferably 0.05 to 5 parts by mass, with respect to 100 parts by mass of the polyolefin resin.

Examples of the above-mentioned phosphorus antioxidant may include trisnonylphenyl phosphite, tris(2,4-di-tert-butylphenyl)phosphite, tris[2-tert-butyl-4-(3-tert-butyl-4-hydroxy-5-methylphenylthio)-5-methylphenyl] phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tritert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidenebis(2-tert-butyl-5-methylphenol) diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-tert-butylphenyl)-octadecyl phosphite, 2,2'-ethylidenebis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl) amine, a phosphite of 2-ethyl-2-butylpropylene glycol and 2,4,6-tritert-butylphenol, and the like.

The content of the above-mentioned phosphorus antioxidant is preferably 0.01 to 10 parts by mass, more preferably 0.05 to 5 parts by mass, with respect to 100 parts by mass of the polyolefin resin.

Examples of the above-mentioned thioether antioxidant may include dialkyl thiodipropionates such as dilauryl thiodipropionate, dimyristyl thiodipropionate, distearyl thiodipropionate, and β-alkylmercaptopropionate esters of polyols such as pentaerythritol tetra(β-dodecylmercaptopropionate).

The above-mentioned thioether antioxidant is used by a content of preferably 0.01 to 10 parts by mass, more preferably 0.05 to 5 parts by mass, with respect to 100 parts by mass of the polyolefin resin.

Examples of the above-mentioned ultraviolet absorbent may include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylenebis(4-tert-octyl-6-benzotriazolyl)phenol and 2-(2'-hydroxy-3'-tert-butyl-5'-carboxyphenyl)benzotriazole; benzoates such as phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate and hexadecyl-3,5-di-tert-butyl-4-hydroxybenzoate; substituted oxanilides such as 2-ethyl-2'-ethoxyoxanilide and 2-ethoxy-4'-dodecyloxanilide; cyanoacrylates such as ethyl-a-cyano-β,β-diphenylacrylate and methyl-2-cyano-3-methyl-3-(p-methoxyphenyl)acrylate; triaryltriazines such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine and 2-(2-hydroxy-4-propoxy-5-methylphenyl)-4,6-bis(2,4-di-tert-butylphenyl)-s-triazine.

The content of the above-mentioned ultraviolet absorbent is preferably 0.05 to 10 parts by mass, more preferably 0.1 to 5 parts by mass, with respect to 100 parts by mass of the polyolefin resin.

Examples of the above-mentioned hindered amine light stabilizer may include hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, bis(1-undecyloxy-2,2,6,6-tetramethyl-4-piperidyl)carbonate, tetrakis(2,2,6,6-tetramethyl-4-piperidylbutane)tetracarboxylate, tetrakis(1,2,2,6,6-pentamethyl-4-piperidylbutane)tetracarboxylate, bis(2,2,6,6-tetramethyl-4-piperidyl)-di(tridecyl)-1,2,3,4-butanetetracarboxylate, bis(1,2,2,6,6-pentamethyl-4-piperidyl)-di(tridecyl)-1,2,3,4-butanetetracarboxylate, bis(1,2,2,6,6-pentamethyl-4-piperidyl)-2-butyl-2-(3,5-di-tert-butyl-4-hydroxybenzyl) malonate, a polycondensate of 1-(2-hydroxyethyl)-2,2,6,6-tetramethyl-4-piperidinol/diethyl succinate, a polycondensate of 1,6-bis(2,2,6,6-tetramethyl-4-piperidylamino)hexane/dibromoethane, a polycondensate of 1,6-bis(2,2,6,6-tetramethyl-4-piperidylamino)hexane/2,4-dichloro-6-morpholino-s-triazi ne, a polycondensate of 1,6-bis(2,2,6,6-tetramethyl-4-piperidylamino)hexane/2,4-dichloro-6-tert-octylamino-s-tr iazine, 1,5,8,12-tetrakis[2,4-bis(N-butyl-N-(2,2,6,6-tetramethyl-4-piperidyl)amino)-s-triazine-6 -yl]-1,5,8,12-tetraazadodecane, 1,5,8,12-tetrakis[2,4-bis(N-butyl-N-(1,2,2,6,6-pentamethyl-4-piperidyl)amino)-s-triazin e-6-yl]-1,5,8,12-tetraazadodecane, 1,6,11-tris[2,4-bis(N-butyl-N-(2,2,6,6-tetramethyl-4-piperidyl)amino)-s-triazine-6-ylami noundecane and 1,6,11-tris[2,4-bis(N-butyl-N-(1,2,2,6,6-pentamethyl-4-piperidyl)amino)-s-triazine-6-yl aminoundecane.

The content of the above-mentioned hindered amine light stabilizer is preferably 0.01 to 10 parts by mass, more preferably 0.05 to 5 parts by mass, with respect to 100 parts by mass of the polyolefin resin.

Examples of the above-mentioned other nucleator may include metal salts of benzoates such as sodium benzoate, aluminum p-tert-butyl benzoate and lithium p-tert-butyl benzoate; metal salts of phosphate esters such as lithium 2,2-methylenebis(4,6-di-tert-butylphenyl)phosphate ester and sodium 2,2-methylenebis(4,6-di-tert-butylphenyl)phosphate ester; benzylidene sorbitols such as dibenzylidene sorbitol, bis(4-methylbenzylidene)sorbitol, bis(4-ethylbenzylidene)sorbitol and bis(dimethylbenzylidene)sorbitol; metal alcoholates such as glycerin zinc; amino acid metal salts such as zinc glutamate; and an aliphatic dibasic acid having a bicyclo structure and metal salts thereof such as bicycloheptanedicarboxylic acid or salts thereof.

The content of the above-mentioned other nucleator is preferably 0.01 to 10 parts by mass, more preferably 0.05 to 5 parts by mass, with respect to 100 parts by mass of the polyolefin resin.

Furthermore, if necessary, the polyolefin resin composition may further contain hydrotalcites, an aliphatic acid salt of an alkali earth metal such as calcium stearate and magnesium stearate, a flame retardant, a heavy metal deactivator, an antistatic agent, a filler, and a lubricant such as ethylenebisstearylamide and erucic acid amide.

As the above-mentioned hydrotalcite, a compound represented by the following formula (II), or a compound obtained by substituting a part of the carbonate anions with perchloric acid in a compound represented by the following formula is used.

ZnₚMg_{q}AlᵣCO₃(OH)_{(2p+2q+3r-2)}·nH₂O (II)

wherein p represents a number of 0 ≤ p ≤ 4, q represents a number of 2 ≤ q ≤ 6, r represents a number of 1 ≤ r ≤ 3, and n represents a number of 0 ≤ n ≤ 20.

As the above-mentioned flame retardant, halogen flame retardants such as decabromodiphenyl ether and tetrabromobisphenol A, condensated phosphate esters of a polyvalent phenol such as triphenylphosphate, resorcinol and bisphenol A and a monovalent phenol such as phenol and 2,6-xylenol; inorganic phosphorus compounds such as red phosphorus, ammonium phosphate, melamine phosphate, melamine pyrophosphate, melamine polyphosphate and piperazine phosphate; nitrogen-containing flame retardants such as melamine cyanurate; inorganic flame retardants such as magnesium hydroxide and aluminum hydroxide; flame retardant aids such as antimony oxide and zirconium oxide; dripping inhibitors such as polytetrafluoroethylene, are used.

Examples of the above-mentioned heavy metal deactivator may include 2-hydroxybenzamide-N-1H-1,2,4-triazol-3-yl and dodecanedioic acid bis[2-(2-hydroxybenzoyl)hydrazide].

In the polyolefin resin composition, the incorporation of the compound represented by the formula (I) as a nucleator, a nucleator component other than the compound represented by the formula (I) and other additives in the above-mentioned polyolefin resin is not specifically limited, and they may be incorporated individually or incorporated after forming into granules or a master batch together with the nucleator component. For example, a powder or pellets of the polyolefin resin may be mixed with the nucleator component and additives by dry blend, or a part of the nucleator component and additives may be pre-blended and then dry-blended with the residual components. After the dry blending, mixing may be conducted by using, for example, a mill roll, a Banbury mixer or a super mixer, and thereafter kneading may be conducted by using a monoaxial or biaxial extruder. The mixing and kneading are generally conducted under a temperature of about 150 to 300°C. Furthermore, a method including adding the nucleator component and/or the additives in the step of polymerizing the polyolefin resin, a method including preparing a master batch including the nucleator and/or the additives at high concentrations, and adding the master batch to the polyolefin resin can also be used.

In molding the polyolefin resin composition, similar molding to that for general plastics such as extrusion molding, injection molding, blow molding, vacuum molding and compression molding can be conducted, and various molded articles such as sheets, rods, bottles and containers can be readily obtained.

The polyolefin resin composition can be used for various applications such as building materials, agricultural materials, automobile parts, packaging materials, miscellaneous goods, toys, household appliances and medical apparatuses depending on the characteristics of the synthetic resin used. Specifically, it is preferably used for medical uses such as infusion bags, syringes and prefilled syringes for which extraction resistance and high transparency are required.

### EXAMPLES

Hereinafter the present invention will be explained in more detail with referring to the Examples. However, the present invention is not limited by the following Examples.

### [Synthetic Example 1]

5.2 g of isophthalic acid dihydrazide and 5.5 g of triethylamine were added to a 200 ml three-necked flask. 50 ml of dimethylacetamide was added as a solvent, followed by cooling to 0°C. 8 g of cyclohexanecarboxylic acid chloride was added to this solution by a dropping funnel, and a reaction was conducted at room temperature for 30 minutes and at 85°C for 3 hours. All of the operations were conducted under a nitrogen atmosphere. After cooling, 50 ml of water was added to quench the reaction, and the product was separated by filtration and washed with 50 ml of methanol to give a compound represented by the above-mentioned formula (I) (hereinafter also referred to as Compound No. 1) as a white solid powder. The white solid powder was recrystallized from a DMSO/methanol system. The yield was 74%.

### [Example 1-1 and Comparative Examples 1-1 to 1-5]

100 parts by mass of a polypropylene homopolymer (melt flow rate=10 g/10 min), 0.05 part by mass of calcium stearate, 0.1 part by mass of tetrakis[3-(3,5-di-tert-butyl-4-hydroxyphenyl) methyl propionate]methane, 0.05 part by mass of tris(2,4-di-tert-butylphenyl)phosphite and 0.1 part by mass of the nucleator (compound) described in Table 1 were blended in a Henschel mixer (manufactured by Nippon Cokes & Engineering Co., Ltd.: FM mixer) and extruded at 230°C to give pellets. Using these pellets, the crystallization temperature, anisotropicity in shrinkage factors, bending flexural modulus and copper-deactivating property (stabilization effect against heavy metals) were evaluated under the following conditions.

### (Crystallization temperature)

The above-mentioned pellets were molded into a film on a press molding machine (manufactured by Toho Machinery Co., Ltd.: TBD-50-2) (230°C, 50 tx30 seconds). A small piece (about 5 mg) that was cut out by a punch having a diameter of 6 mm was inserted in and tightly adhered to a pan for DSC measurement to give a sample for DSC measurement. The measurement of each sample was conducted by using a differential scanning calorimeter (manufactured by Perkin-Elmer: Diamond-DSC). Specifically, in a chart obtained by raising the temperature at 20°C/min up to 230°C, retaining for 10 minutes and cooling at -10°C/min up to 80°C, the peak top of heat generation was defined as a crystallization temperature. The results are shown in Table 1.

### (Anisotropicity in shrinkage factors)

The above-mentioned pellets were subjected to injection molding (injection temperature: 230°C, injection pressure: 80 MP) in an injection molding machine (manufactured by Toshiba Corporation: EC100) to give a test piece of 60 mm x 60 mm x 2 mm. The shrinkage factors in the machine direction (MD) and in the traverse direction (TD) of the resin in the obtained test piece were measured, a shrinkage ratio (MD/TD) was obtained from these shrinkage factors, and the magnitude of the anisotropicity in the shrinkage factors was evaluated. The results are shown in Table 1.

### (Bending flexural modulus)

A stress-strain measurement was conducted in accordance with ISO178 a bending flexural modulus (MPa) was obtained from the gradient of the initial tangent line thereof, and the average of five test results was defined as a measurement value. The results are shown in Table 1.

The measurement was conducted in a room kept at 23°C at a test velocity: 20 mm/min.

### (Copper-deactivating property)

The above-mentioned pellets were subjected to injection molding (injection temperature: 230°C, injection pressure: 80 MP) in an injection molding machine (manufactured by Toshiba: EC100) to give a sheet of 60 mmx60 mmx2 mm. The obtained sheet was attached to a copper foil (thickness: 1 mm) and put into a gear oven at 160°C to blacken the sheet, and the time until blackening was evaluated as copper-deactivating property (stabilization effect against heavy metals). The results are shown in Table 1.

**[Table 1]**

| | Nucleator (compound) | Crystallization temperature (°C) | Shrinkage factor anisotropy | Bending flexural modulus (MPa) | Copper-deacti vating property (hours) |
|---|---|---|---|---|---|
| Example 1-1 | No.1 | 130 | 1.003 | 2170 | 144 |
| Comparative Example 1-1 | Not used | 116 | 0.913 | 1660 | 144 |
| Comparative Example 1-2 | Comparative 1 *¹ | 129 | 0.824 | 2230 | 144 |
| Comparative Example 1-3 | Comparative 2 *² | 130 | 0.918 | 1940 | 144 |
| Comparative Example 1-4 | Comparative 3 *³ | 120 | 0.994 | 1670 | 400 |
| Comparative Example 1-5 | Comparative 4 *⁴ | 120 | 0.939 | 1670 | 144 |

| | | | | | |
|---|---|---|---|---|---|
| *1: 2,2-Methylenebis(4,6-dimethylphenyl)phosphate ester sodium *2: Bicyclo[2,2,1]heptane-1,2-dicarboxylic acid disodium *3: 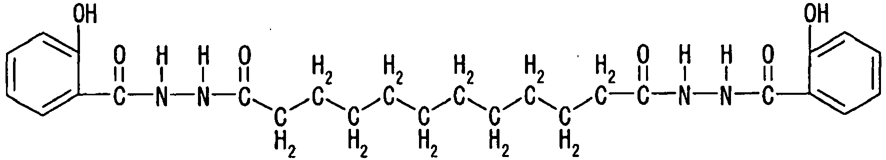 *4: 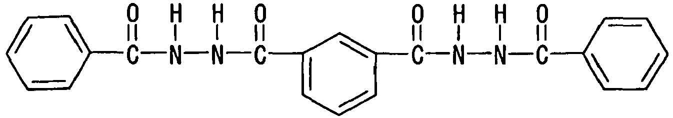 | | | | | |

In Table 1, from the comparison of Example 1-1 and Comparative Examples 1-2 and 1-3, the specific isophthalic acid derivative used as a nucleator in the polyolefin resin composition has similar effects of improving crystallization temperature and improving physical characteristics to those of conventionally known nucleators, and provides extremely low anisotropicity in shrinkage factors that is a problem in conventional nucleators. Furthermore, since the specific isophthalic acid derivative used in the present invention does not show copper-deactivating property as in known hydrazide compounds that have been conventionally used as copper deactivator, it is evident that it was impossible to incorporate the specific isophthalic acid derivative used in the present invention as a copper deactivator in a polyolefin resin based on conventional findings. Furthermore, from Comparative Example 1-4, a nucleating effect in the polyolefin resin was not observed in the conventionally-known copper deactivator, and from Comparative Example 1-5, both of nucleating effect and copper-deactivating property were not observed in the derivative of isophthalic acid and hydrazine having a similar structure to the specific isophthalic acid derivative used in the present invention. From these facts, it is evident that the nucleating effect exhibited by the specific isophthalic acid derivative used in the present invention is a specific effect that is expressed in a specifically-selected structure.

## Claims

1. Use of (B), a compound represented by the following formula (I), as a nucleator in a polyolefin resin composition, the polyolefin resin composition comprising 0.01 to 10 parts by mass of (B) with respect to 100 parts by mass of (A) a polyolefin resin:

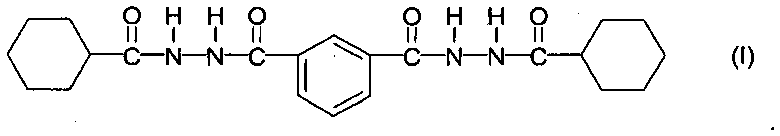

2. The use of (B) according to claim 1, wherein the polyolefin resin that is the component (A) is a polypropylene.

## Patentansprüche

1. Verwendung von (B), einer Verbindung, welche durch die folgende Formel (I) dargestellt ist, als ein Nukleierungsmittel (nucleator) in einer Polyolefin-Harzzusammensetzung, wobei die Polyolefin-Harzzusammensetzung 0.01 bis 10 Gewichtsteile (Massenteile) von (B) bezogen auf 100 Gewichtsteile (Massenteile) von (A), einem Polyolefin-Harz, umfasst:

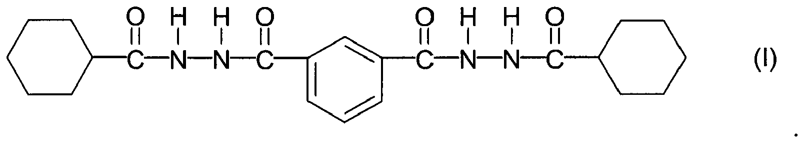

2. Die Verwendung von (B) gemäß Anspruch 1, wobei das Polyolefin-Harz, welches die Komponente (A) ist, ein Polypropylen ist.

## Revendications

1. Utilisation de (B), un composé représenté par la formule suivante (I), comme agent de nucléation dans une composition de résine de polyoléfine, la composition de résine de polyoléfine comprenant de 0,01 à 10 parties en masse de (B) par rapport à 100 parties en masse d'une résine de polyoléfine (A) :

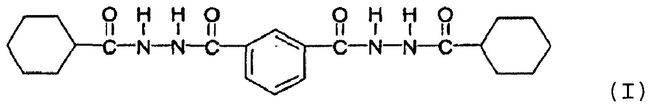

2. Utilisation de (B) selon la revendication 1, dans laquelle la résine de polyoléfine qui est le composant (A) est un polypropylène.
